# EUROPEAN PATENT APPLICATION

(11) **EP 2 896 736 A1**
(43) Date of publication of application: **22.07.2015**
(21) Application number: 15150466.9
(22) Date of filing: 08.01.2015
(51) Int. Cl.: D06F 39/00, A47L 15/42, D06F 58/28, D06F 33/02

(54) **Electronic home appliance and control method thereof**

(30) Priority: 10.01.2014 KR 20140003519
(71) Applicant: LG Electronics Inc., Yeongdeungpo-gu Seoul 150-721 (KR)
(72) Inventor: Hwang, Kyungeun, 153-802 Seoul (KR); Seo, Soomin, 153-802 Seoul (KR); Lee, Youjin, 153-802 Seoul (KR)
(74) Representative: Vossius & Partner Patentanwälte Rechtsanwälte mbB

(57) **Abstract**

An electric home appliance (100) is disclosed. The electric home appliance includes a sensing unit (140, 240) for sensing whether a human body is within a predetermined range and recognizing a distance value from the human body, an output unit (130, 230) for outputting information, and a controller (210) for deciding an information output mode of the output unit based on a distance range, within which the distance value from the human body is, among a plurality of predetermined distance ranges in a case in which the human body is sensed.

## Description

The present invention relates to an electric home appliance and a control method thereof.

In general, an electric home appliance may be an air conditioner for conditioning indoor air, a laundry treatment apparatus for treating laundry, or a refrigerator for storing food. For example, the laundry treatment apparatus may include a washing machine, a drying machine, and a washing and drying machine.

The washing machine is an apparatus that performs a series of processes including washing, rinsing, and spin-drying to remove contaminants from laundry, such as clothing and bedding, using water, detergent, and mechanical actions. The washing machine may be classified as a top load type washing machine configured such that a drum, in which laundry is placed, is rotated about a vertical shaft or a front load type washing machine configured such that a drum, in which laundry is placed, is rotated about a horizontal shaft.

The drying machine is an apparatus which applies hot air to laundry, such as clothing, to dry the laundry. Specifically, laundry is introduced into a drum, and hot air or cold air is supplied into the drum during rotation of the drum to dry the laundry.

The washing and drying machine is an apparatus having both a washing function and a drying function. Specifically, laundry is introduced into a drum, and a desired function is executed during rotation of the drum to wash or dry the laundry.

The electric home appliance, including the laundry treatment apparatus, may provide an operation state of the electric home appliance to a user. For this reason, there is a high necessity for research on a method of effectively providing information based on situation of the user.

It is an object of the present invention to provide an electric home appliance that is capable of deciding an information output mode of an output unit based on location of a user and a control method thereof.

This object is achieved with the features of the independent claims. Embodiments of the invention are defined by the dependent claims.

In accordance with an aspect of the present invention, the above and other objects can be accomplished by the provision of an electric home appliance including a sensing unit for sensing whether a human body is within a predetermined range and recognizing a distance value from the human body, an output unit for outputting information, and a controller for deciding an information output mode of the output unit based on a distance range, within which the distance value from the human body is, among a plurality of predetermined distance ranges in a case in which the human body is sensed.

The controller may decide size of text, type, quality, and volume of a notification sound, or type of information output by the output unit based on the distance range, within which the distance value from the human body is.

The distance ranges may include a first distance range, a second distance range greater than the first distance range, and a third distance range greater than the second distance range, and the controller may control the output unit to output at least one selected from among a current time, a current use mode, and a remaining operation time of the current use mode in a case in which the distance value from the human body is within the third distance range.

The controller may control the output unit to display various temperature values necessary for control or a procedure of the current use mode in a case in which the distance value from the human body is within the second distance range.

The controller may control the output unit to display information for function setting in a case in which the distance value from the human body is within the first distance range.

The controller may increase quantity of information output by the output unit as the distance value from the human body decreases.

The output unit may include a speaker for outputting a notification sound indicating an operation state of the electric home appliance, and the controller may adjust volume of the speaker based on the distance value from the human body.

In accordance with another aspect of the present invention, there is provided a control method of an electric home appliance including sensing whether a human body is within a predetermined range through a sensing unit, calculating a distance value from the human body, and deciding an information output mode of an output unit based on presence or absence of the human body and the distance value from the human body.

The step of deciding the information output mode of the output unit may include increasing quantity of information output by the output unit as the distance value from the human body decreases.

The step of deciding the information output mode of the output unit may include deciding quantity of information output by the output unit based on a distance range, within which the distance value from the human body is, among a plurality of predetermined distance ranges.

The step of deciding the information output mode of the output unit may include deciding size of text, type, quality, and volume of a notification sound, or type of information output by the output unit based on the distance range, within which the distance value from the human body is.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view showing a washing machine, which is one example of an electric home appliance according to an embodiment of the present invention;
FIG. 2 is a block diagram showing components of an electric home appliance according to another embodiment of the present invention;
FIGS. 3 to 5 are views showing an information output mode of the electric home appliance according to the embodiment of the present invention;
FIGS. 6 and 7 are views showing a control process of the electric home appliance according to the embodiment of the present invention; and
FIG. 8 is a view showing a control method of an electric home appliance according to an embodiment of the present invention.

### DETAILED DESCRIPTION OF THE PREFERRED EMBODIMENTS

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

Terms used in the description of the invention are provided only to explain specific embodiments but are not intended to restrict the invention. In the description of the invention and the accompanying claims, the singular forms are intended to include the plural forms as well, unless context clearly indicates otherwise. The use of marks may indicate any one or both of the singular forms and the plural forms of the terms, and vice versa.

It will be understood that the term "and/or" refers to one or more possible combinations of specified relevant items and includes such combinations. It will be further understood that the terms "comprises" or "comprising" used in this specification designate presence of specified features, integers, steps, operations, elements, and/or components but do not exclude presence or addition of one or more other features, integers, steps, operations, elements, components, and/or groups thereof.

The term "if" may be interpreted to mean "when" or "upon" or "in response to determining" or "in response to detecting" from the context. In the same manner, the phrases "in a determined case" or "in a case in which [a specified condition or event] is detected" may be interpreted to mean "upon determining", "in response to determining", "upon detecting [a specified condition or event]" or "in response to detecting [a specified condition or event]" from the context.

Hereinafter, embodiments of computing devices, user interfaces for the computing devices, and related processes necessary to use the computing device may be described.

Reference will now be made in detail to the preferred embodiments of the present invention, examples of which are illustrated in the accompanying drawings. Hereinafter, a washing machine, which is one example of an electric home appliance, will be described by way of example. However, the present invention is not limited thereto. For example, the idea of the present invention may be applied to other laundry treatment apparatuses, such as a drying machine, an oven, an air conditioner, and a refrigerator.

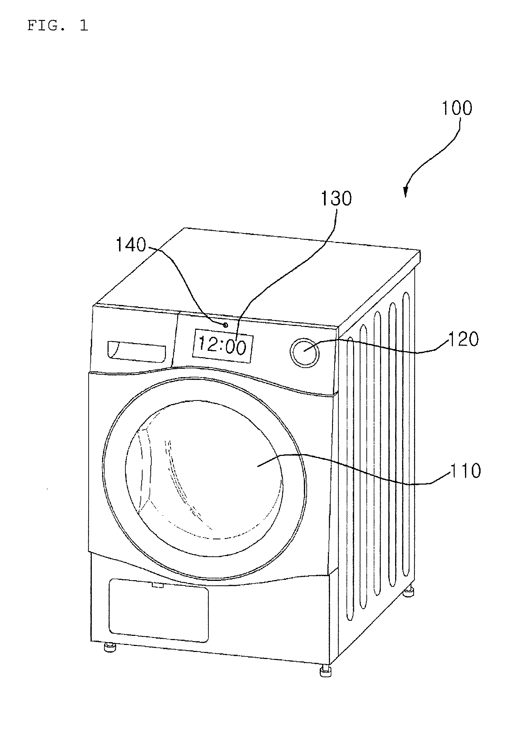

FIG. 1 is a perspective view showing a washing machine, which is one example of an electric home appliance according to an embodiment of the present invention.

Referring to FIG. 1, a washing machine 100, which is one example of an electric home appliance according to an embodiment of the present invention, may include a case forming the external appearance of the washing machine and a drum rotatably provided in the case for receiving laundry, such as clothing. The drum may be provided at an internal circumferential surface thereof with a plurality of lifters for lifting clothing upward and dropping the clothing downward when the drum is rotated.

The case may be provided at the front thereof with a clothing introduction port, which is opened such that clothing may be introduced into the drum through the clothing introduction port. The case may be provided at the upper side of the front thereof with an output unit 130 for outputting control information of the washing machine. The output unit 130 may include a light source, such as a liquid crystal display (LCD) or a light emitting diode (LED), for displaying control information of the washing machine. However, the present invention is not limited thereto.

A door 110 may be mounted at the clothing introduction port. The door 110 may open and close the clothing introduction port, which is an entrance through which clothing is introduced into the drum. The door 110 may be manually manipulated by a user or operated according to electronic control. The door 110 may be hingedly connected to the case.

An input unit 120 may be disposed at the front of the washing machine 100. The input unit 120 may be protruded or retreated. However, the present invention is not limited thereto. For example, the input unit 120 may be configured in the form of a rotary dial. The input unit 120 may be disposed in the case of the washing machine and may be protruded outward from the case depending upon location of the user.

The output unit 130 may output various kinds of information. The output unit 130 may display an operation mode, an operation time, or weather information. However, the present invention is not limited thereto. In FIG. 1, the output unit 130 is shown as a display unit for visually displaying information. However, the present invention is not limited thereto. For example, the output unit 130 may include a speaker for aurally outputting information. Idea of the present invention may be applied to the display unit or the speaker as the output unit 130 for outputting information. However, the output unit 130 is not limited to any one selected from between the display unit and the speaker.

The output unit 130 may change an information display mode when a user approaches the washing machine.

The electric home appliance may include a sensing unit 140 for sensing whether an object is in front of the electric home appliance. The sensing unit 140 may sense whether an object is within a predetermined distance from the electric home appliance 100. For example, the sensing unit 140 may sense whether a human body is within a predetermined range. The sensing unit 140 may be disposed at the upper part of the middle of the case. However, the present invention is not limited thereto. For example, the sensing unit 140 may be disposed at the upper end of the right side or the left side of the case depending upon the type of a sensor included in the sensing unit 140.

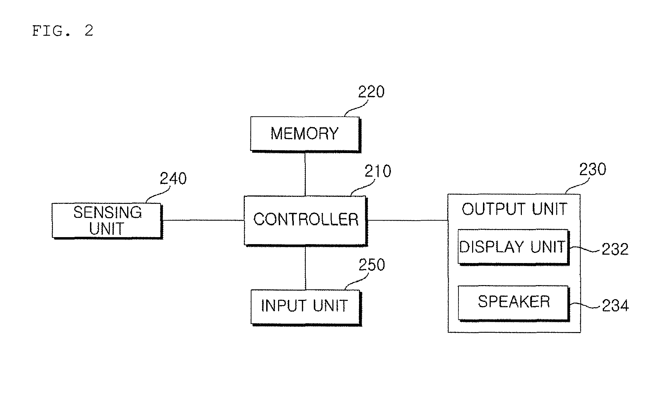

FIG. 2 is a block diagram showing components of an electric home appliance according to another embodiment of the present invention.

Referring to FIG. 2, the electric home appliance according to the embodiment of the present invention may include a sensing unit 240 for sensing whether a human body is within a predetermined range, an output unit 230 for outputting information, and a controller 210 for deciding an information output mode of the output unit 230 based on presence or absence of the human body sensed by the sensing unit 240.

The controller 210 may control operation of the electric home appliance. The controller 210 may transmit and receive a control signal to and from the other components of the electric home appliance. The controller 210 may transmit a signal to each component of the electric home appliance to control each component.

The controller 210 may output data stored in a memory 220 to the output unit 230 or execute a program stored in the memory 220 to process the data.

The controller 210 may recognize a time during which the human body is within the predetermined range. For example, the controller 210 may recognize whether the human body is within the predetermined range based on a signal output as a result of presence or absence of an object sensed by the sensing unit 240.

The controller 210 may recognize whether the human body is within the predetermined range for a predetermined time or more. In a case in which the human body deviates from the predetermined range, the controller 210 may initialize time. In a case in which the human body reenters the predetermined range, the controller 210 may recalculate time from the beginning.

In a case in which the human body is within the predetermined range for the predetermined time or more, the controller 210 may add the number of information items output by the output unit 230. For example, in a case in which the human body is within the predetermined range for less than the predetermined time, the controller 210 may output a current time through the output unit 230. On the other hand, in a case in which the human body is within the predetermined range for the predetermined time or more, the controller 210 may further output information regarding a use mode through the output unit 230. However, the present invention is not limited thereto.

The controller 210 may control the output unit 230 to output information in different modes according to the distance from the human body. For example, as the distance from the human body decreases, the controller 210 may control the output unit 230 to output detailed information. On the other hand, as the distance from the human body increases, the controller 210 may control the output unit 230 to output simple information. For example, in a case in which the distance from the human body is large, the controller 210 may control the output unit 230 to output only a current time.

As the distance from the human body decreases, the controller 210 may increase quantity of information output by the output unit 230. As the distance from the human body increases, the controller 210 may decrease quantity of information output by the output unit 230. As the distance from the human body increases, the controller 210 may simplify a format of information output by the output unit 230.

The controller 210 may set a plurality of distance ranges. The controller 210 may decide a format of information output by the output unit 230 based on a distance range, within which the distance value from the human body is, among the predetermined distance ranges.

The controller 210 may decide the type, display mode, etc. of information output by the output unit 230 based on a distance value from the human body. For example, the controller 210 may decide the size of text output by the output unit 230, the type, quality, and volume of the notification sound output by the output unit 230, or the type of information output by the output unit 230 based on a distance range, within which the distance value from the human body is.

For example, the controller 210 may set a plurality of distance ranges. The distance ranges may include a first distance range, a second distance range greater than the first distance range, and a third distance range greater than the second distance range.

### [A case in which the output unit is a display unit 232 for visually outputting information]

In a case in which the distance value from the human body is within the third distance range, the controller 210 may control the output unit 230 to output at least one selected from among a current time, a current use mode, and a remaining operation time of the current use mode. In a case in which the distance value from the human body is within the second distance range, the controller 210 may control the output unit 230 to display various temperature values necessary for control or a procedure of a current use mode. In a case in which the distance value from the human body is within the first distance range, the controller 210 may control the output unit 230 to display information for function setting.

The controller 210 may decide luminance of the display unit 232 based on the distance value from the human body. For example, as the distance value from the human body decreases, the controller 210 may decrease a luminance value of the display unit 232. On the other hand, as the distance value from the human body increases, the controller 210 may increase the luminance value of the display unit 232.

The controller 210 may determine whether the human body gazes at the electric home appliance. For example, the sensing unit 240 may sense pupils of the human body and the controller 210 may determine whether the human body gazes at the electric home appliance based on motion of the pupils of the human body. The controller 210 may adjust luminance of the display unit 232 based on the determination as to whether the human body gazes at the electric home appliance. For example, in a case in which the human body gazes at the electric home appliance, the controller 210 may decrease the luminance of the display unit 232. However, the present invention is not limited thereto.

### [A case in which the output unit is a speaker 234 for aurally outputting information]

The controller 210 may output a notification sound through the output unit 230. For example, as the distance value from the human body increases, the controller 210 may decrease quality of the notification sound output by the output unit 230. For example, as the distance from the human body increases, the controller 210 may widen a sampling interval of the notification sound output by the output unit 230. However, the present invention is not limited thereto.

As the distance value from the human body decreases, the controller 210 may increase quality of the notification sound output by the output unit 230. For example, as the distance from the human body decreases, the controller 210 may narrow the sampling interval of the notification sound output by the output unit 230. However, the present invention is not limited thereto.

The controller 210 may adjust volume of the output unit 230 based on the distance value from the human body. For example, as the distance from the human body decreases, the controller 210 may decrease the volume of the output unit 230. On the other hand, as the distance from the human body increases, the controller 210 may increase the volume of the output unit 230.

In a case in which the speaker 234 outputs a notification sound and there is no user response for a predetermined time or more, the controller 210 may change the type of the notification sound output by the speaker 234 or increase the volume of the notification sound.

The controller 210 may determine presence or absence of use information of the human body sensed by the sensing unit 240. The controller 210 may analyze identity of the human body using the electric home appliance. For example, the controller 210 may store use information, including information regarding whether the human body sensed by the sensing unit 240 has used the electric home appliance, in the memory 220. For example, the controller 210 may store use information, including information regarding the shape, size, fingerprint, etc. of the human body sensed by the sensing unit 240, in the memory 220.

The controller 210 may determine presence or absence of use information corresponding to the human body sensed by the sensing unit 240. In a case in which the use information is present, the controller 210 may display a plurality of use modes through the output unit 230 based on the use information. For example, the controller 210 may output the use modes through the output unit 230 in order of high use frequency based on the use information. However, the present invention is not limited thereto.

In a case in which the use information is absent, the controller 210 may display all manipulatable functions, a sequence of cycles, remaining time, and other detailed information through the output unit 230. However, the present invention is not limited thereto.

Meanwhile, the controller 210 may be embodied using at least one selected from among application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units for performing other functions.

The memory 220 may include a high-speed random access memory. The memory 220 may include nonvolatile memories, such as one or more magnetic disc storage devices, flash memory devices, or other nonvolatile solid memory devices. However, the present invention is not limited thereto. The memory 220 may include a readable storage medium.

For example, the memory 220 may include an electronically erasable and programmable read only memory (EEP-ROM). However, the present invention is not limited thereto. Information may be written into the EEP-ROM or removed from the EEP-ROM under control of the controller 210. The EEP-ROM may be a storage device that retains information without removal of the information even when the electric home appliance is powered off and, therefore, power is not supplied to the EEP-ROM.

The memory 220 may be interlocked with the controller 210 to store various programs or data. Programs stored in the memory 220 may be executed by the controller 210.

The output unit 230 may display various kinds of information. The output unit 230 may include a display unit 232 for visually displaying various kinds of information or a speaker 234 for aurally outputting various kinds of information.

The display unit 232, which is the output unit 230 for visually displaying information, may include at least one selected from among a light emitting polymer display (LPD), a liquid crystal display, a thin film transistor-liquid crystal display, an organic light-emitting diode, a flexible display, and a three-dimensional (3D) display. However, the present invention is not limited thereto.

The output unit 230 may output information necessary to control the electric home appliance. For example, in a case in which the electric home appliance is a washing machine, the output unit 230 may output a washing mode, a washing time, etc. However, present invention is not limited thereto. The output unit 230 may display all information necessary to control the washing machine.

The sensing unit 240 may be disposed at the front of the electric home appliance. The sensing unit 240 may sense whether an object is within a predetermined range. For example, the sensing unit 240 may include at least one selected from among a camera, a kinetic sensor, an infrared sensor, and an ultrasonic sensor. However, the present invention is not limited thereto. The sensing unit 240 may include any sensor that is capable of sensing presence or absence, distance, shape, or size of a human body.

The sensing unit 240 may sense whether an object is within a predetermined range and transmit information regarding presence or absence of the object to the controller 210. The sensing unit 240 may sense a distance from an object or a human body.

For example, the sensing unit 240 may include a stereo camera. In this case, the electric home appliance 100 may include an image processor (not shown). The image processor (not shown) may recognize a distance from an object or a human body based on stereo images acquired by the stereo camera. The image processor (not shown) may be configured separately from the controller 210 and may be included in the sensing unit 240. Alternatively, the image processor (not shown) may be modularized as a software component and may be included in the controller 210. On the other hand, the sensing unit 240 may include a mono camera. In this case, the electric home appliance 100 may include an image processor (not shown). The image processor (not shown) may recognize a distance from an object or a human body based on the change in size of the object or the human body in images acquired by the mono camera. The image processor (not shown) may be configured separately from the controller 210 and may be included in the sensing unit 240. Alternatively, the image processor (not shown) may be modularized as a software component and may be included in the controller 210.

For example, in a case in which the sensing unit 240 includes an ultrasonic sensor, the sensing unit 240 may sense a distance from an object or a human body through a time difference between transmitted and received signals.

For example, the sensing unit 240 may include an infrared sensor and a camera. In this case, when an infrared laser beam is emitted to an object or a human body, an image sensor included in the camera may receive a reflected laser beam point to measure a distance per pixel. The sensing unit 240 may sense the distance from the object or the human body based on the measured distance per pixel.

On the other hand, the kinetic sensor may include a depth sensor. The depth sensor may include an image sensor, such as a complementary metal-oxide-semiconductor (CMOS) sensor or a charge-coupled device (CCD) sensor, or an infrared laser beam projector. When an infrared laser beam is emitted to an object or a human body, the image sensor may receive a reflected laser beam point to measure a distance per pixel. The sensing unit 240 may sense the distance from the object or the human body based on the measured distance per pixel.

Meanwhile, in a case in which the sensing unit 240 may include a camera, the sensing unit 240 may sense whether a human body gazes at the electric home appliance. Specifically, the camera may detect pupils of the human body. At this time, an image processor (not shown) may detect the pupils using a circular detection template, a circular edge detection method, a Daugman's circular edge detection method, etc. Alternatively, the image processor (not shown) may detect the pupils using Hough transform, Haar-like feature, Adaboost algorithm, etc. The image processor (not shown) may be configured separately from the controller 210. Alternatively, the image processor (not shown) may be functionally modularized and may be included in the controller 210.

The input unit 250 may allow a user's input. The input unit 250 may be a dial that can be rotated by manipulation of a user. However, the present invention is not limited thereto. For example, the input unit 250 may be a touch pad or a mechanical button.

The input unit 250 may be enabled or disabled by a command from the controller 210. The input unit 250 may be protruded or retreated by the command from the controller 210. When the user is near the electric home appliance, the input unit 250 may be protruded or enabled. When the user deviates from a predetermined range, the input unit 250 may return to the original position thereof or may be disabled. However, the present invention is not limited thereto.

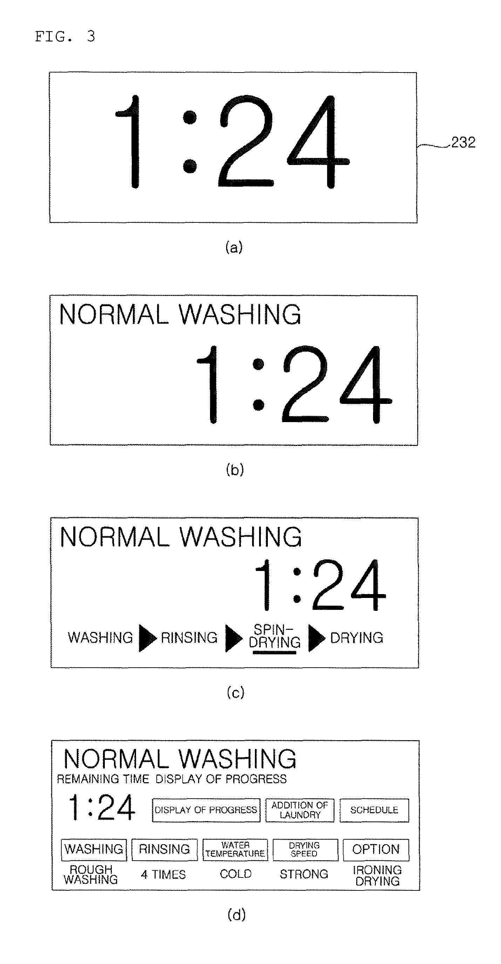

FIGS. 3 to 5 are views showing an information output mode of the electric home appliance according to the embodiment of the present invention.

Referring to FIG. 3, in a case in which an output unit of a washing machine, which is one example of the electric home appliance according to the embodiment of the present invention, is a display unit 232 for visually outputting information, it is possible to recognize an output mode of the display unit, which, however, is merely an embodiment of the present invention and the scope of the present invention is not limited by this embodiment.

FIGS. 3(a), 3(b), 3(c), and 3(d) show display modes of the output unit based on which of the distance ranges, within which the distance value from the human body is. The distance value from the human body sequentially decreases in order from FIG. 3(a) to FIG. 3(d).

Referring to FIG. 3(a), the display unit 232 may output a current time. In a case in which the human body is not within the predetermined range, the display unit 232 may output the current time.

Referring to FIG. 3(b), the display unit 232 may further output a current use mode of the electric home appliance. For example, in a case in which the human body is within the predetermined range for the predetermined time or more, the display unit 232 may further output the current use mode of the electric home appliance.

Referring to FIG. 3(c), the display unit 232 may display a procedure of the current use mode of the electric home appliance. For example, in a case in which the electric home appliance is being currently operated in a use mode corresponding to normal washing, the display unit 232 may output information indicating that washing, rinsing, spin-drying, and drying procedures are being sequentially performed.

The display unit 232 may output a procedure which is being currently performed. For example, the display unit 232 may underline text corresponding to spin-drying, which is a procedure which is being currently performed, to indicate that spin-drying is being currently performed.

Referring to FIG. 3(d), the display unit 232 may display information for function setting. For example, in a case in which the electric home appliance is a washing machine, the display unit 232 may output objects for setting functions, such as operation/pause, addition of laundry, schedule, washing, rinsing, water temperature, drying speed, and an option. However, the present invention is not limited thereto.

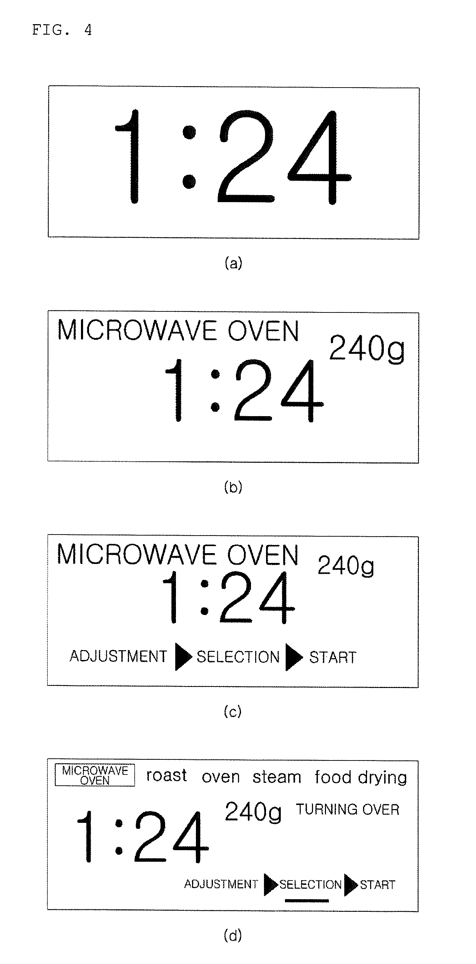

Referring to FIG. 4, in a case in which an output unit of an oven, which is another example of the electric home appliance according to the embodiment of the present invention, is a display unit 232 for visually outputting information, it is possible to recognize an output mode of the display unit, which, however, is merely an embodiment of the present invention and the scope of the present invention is not limited by this embodiment.

FIGS. 4(a), 4(b), 4(c), and 4(d) show display modes of the output unit based on which of the distance ranges, within which the distance value from the human body is. The distance value from the human body sequentially decreases in order from FIG. 4(a) to FIG. 4(d).

Referring to FIG. 4(a), the display unit 232 may output a current time. In a case in which the human body is not within the predetermined range, the display unit 232 may output the current time.

Referring to FIG. 4(b), the display unit 232 may further output a current use mode of the electric home appliance. For example, in a case in which the human body is within the predetermined range for the predetermined time or more, the display unit 232 may further output the current use mode of the electric home appliance. For example, the display unit 232 may display information indicating that the oven is being currently used in a food heating mode using high-frequency heating as in a microwave oven.

Referring to FIG. 4(c), the display unit 232 may display a procedure of the current use mode of the electric home appliance. For example, in a case in which the electric home appliance is being currently operated in a use mode corresponding to the microwave oven, the display unit 232 may output information indicating that the electric home appliance is being sequentially controlled through adjustment, selection, and start procedures.

The display unit 232 may output a procedure which is being currently performed. For example, the display unit 232 may underline text corresponding to selection, which is a procedure which is being currently performed, to indicate that selection is being currently performed.

Referring to FIG. 4(d), the display unit 232 may display information for function setting. For example, in a case in which the electric home appliance is an oven, the display unit 232 may output objects for setting functions, such as a microwave oven, roast, an oven, steam, and food drying. However, the present invention is not limited thereto.

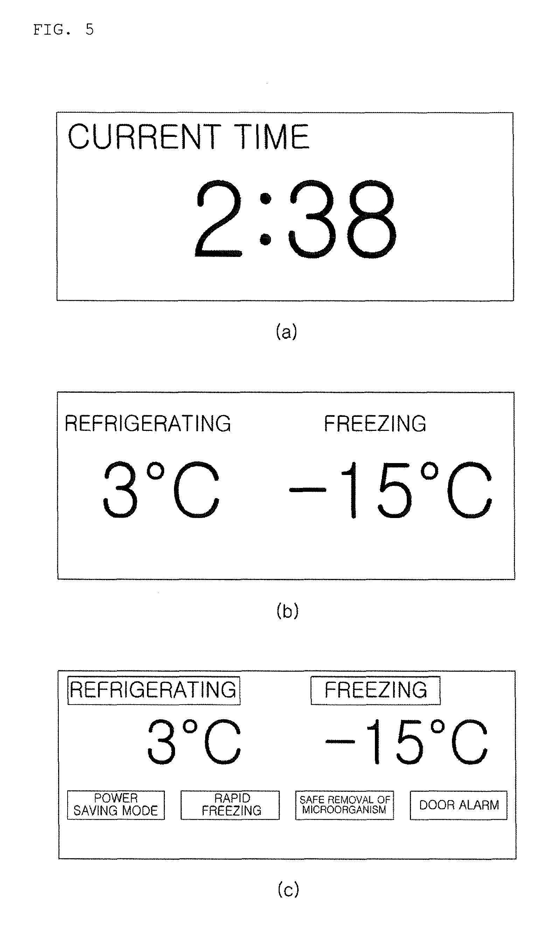

Referring to FIG. 5, in a case in which an output unit of a refrigerator, which is a further example of the electric home appliance according to the embodiment of the present invention, is a display unit 232 for visually outputting information, it is possible to recognize an output mode of the display unit, which, however, is merely an embodiment of the present invention and the scope of the present invention is not limited by this embodiment.

FIGS. 5(a), 5(b), and 5(c) show display modes of the output unit based on which of the distance ranges, within which the distance value from the human body is. The distance value from the human body sequentially decreases in order from FIG. 5(a) to FIG. 5(c).

Referring to FIG. 5(a), the display unit 232 may output a current time. In a case in which the human body is not within the predetermined range, the display unit 232 may output the current time.

Referring to FIG. 5(b), the display unit 232 may output a current temperature. In a case in which the human body is not within the predetermined range, the display unit 232 may output the current temperature. For example, the display unit 232 may output current temperatures of a refrigerator compartment and a freezer compartment. However, the present invention is not limited thereto.

Referring to FIG. 5(c), the display unit 232 may display information for function setting. For example, in a case in which the electric home appliance is a refrigerator, the display unit 232 may output objects for setting functions, such as a power saving mode, rapid freezing, safe removal of microorganism, and door alarm. However, the present invention is not limited thereto.

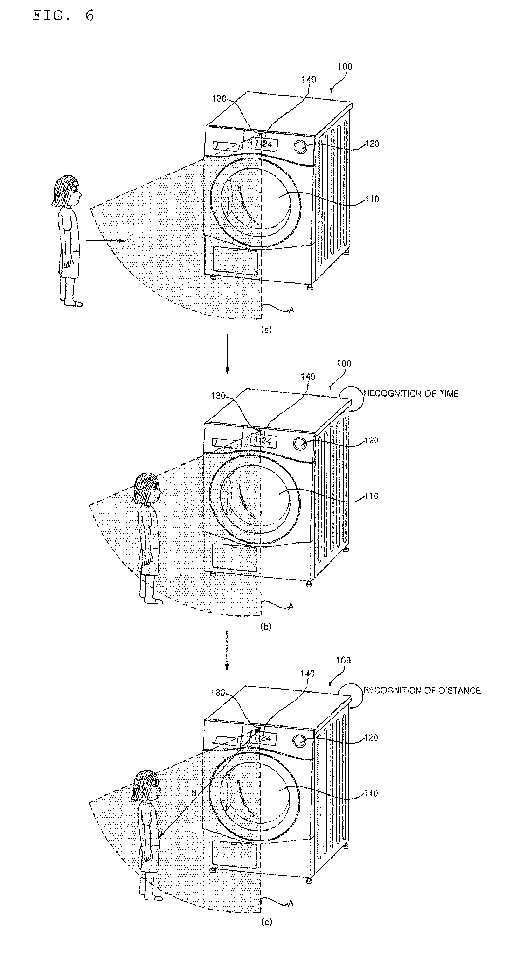

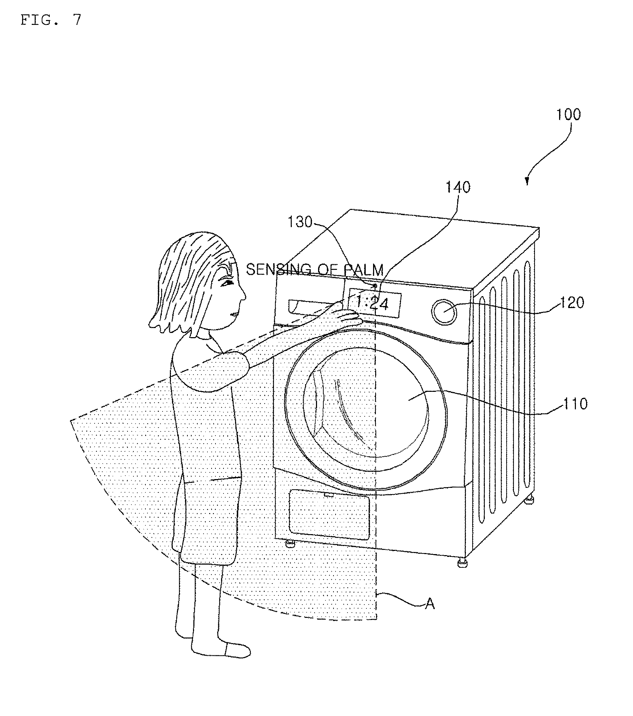

FIGS. 6 and 7 are views showing a control process of the electric home appliance according to the embodiment of the present invention.

Referring to FIG. 6(a), the sensing unit 140 may sense whether a human body is within a predetermined range.

Referring to FIG. 6(a), the electric home appliance may recognize a time during which the human body is within the predetermined range. Referring to FIG. 6(b), in a case in which the electric home appliance according to the embodiment of the present invention is a washing machine, the electric home appliance may determine whether the human body is within the predetermined range for a predetermined time or more.

In a case in which the human body is within the predetermined range for the predetermined time or more, the electric home appliance may add the number of information items output by the output unit 130. In a case in which the human body is within the predetermined range for the predetermined time or more, the electric home appliance may recognize a distance d from the human body.

Referring to FIG. 6(c), the electric home appliance may recognize the distance from the human body. The electric home appliance may output information in different modes based on the distance from the human body. For example, as the distance from the human body decreases, the electric home appliance may output detailed information through the output unit 130. On the other hand, as the distance from the human body increases, the electric home appliance may output simple information through the output unit 130. For example, in a case in which the distance from the human body is large, the electric home appliance may output only a current time through the output unit 130.

The electric home appliance may decide a type of information to be output, an information display mode, etc. based on a distance value from the human body. For example, the electric home appliance may decide the size of text output by the output unit 130, the type, quality, and volume of a notification sound output by the output unit 130, or the type of information output by the output unit 130 based on a distance range, within which the distance value from the human body is.

Referring to FIG. 7, the electric home appliance according to the embodiment of the present invention may sense a palm of the human body through the sensing unit 140. For example, the sensing unit 140 may sense lines of the palm or a fingerprint of the human body. However, the present invention is not limited thereto.

The electric home appliance may recognize identity of the human body based on the lines of the palm or the fingerprint of the human body sensed by the sensing unit 140. The electric home appliance may decide a method of displaying information through the output unit 130 or information to be displayed by the output unit 130 based on the identity of the human body. However, the present invention is not limited thereto.

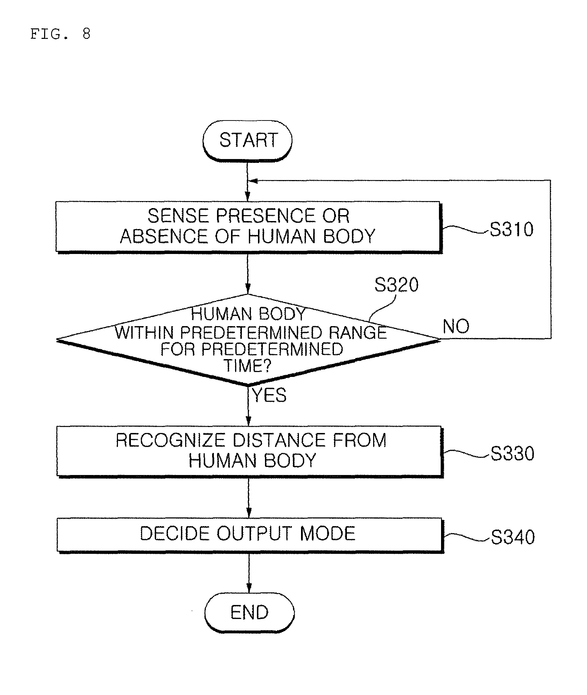

FIG. 8 is a view showing a control method of an electric home appliance according to an embodiment of the present invention.

Referring to FIG. 8, a control method of an electric home appliance according to an embodiment of the present invention may include a step of sensing whether a human body is within a predetermined range (S310), a step of calculating a distance value from the human body (S330), and a step of deciding an information output mode of an output unit based on presence or absence of the human body and the distance value from the human body (S340).

The step of sensing whether the human body is within the predetermined range (S310) may sense presence or absence of the human body through the sensing unit. The control method of the electric home appliance according to the embodiment of the present invention may further include a step of recognizing a time during which the human body is within the predetermined range (S320) after the step of sensing whether the human body is within the predetermined range (S310). That is, the controller 210 may sense presence or absence of the human body through the sensing unit 240 (S310). In a state in which the presence of the human body is sensed, the controller 210 may determine whether the human body is within the predetermined distance for a predetermined time or more (S320).

The step of sensing whether the human body is within the predetermined range (S310) may include the step of determining whether the human body is within the predetermined distance for the predetermined time or more (S320). The step of determining whether the human body is within the predetermined distance for the predetermined time or more (S320) may initialize time in a case in which the human body deviates from the predetermined distance. The step of determining whether the human body is within the predetermined distance for the predetermined time or more (S320) may recalculate time from the beginning in a case in which the human body reenters the predetermined range. That is, in a case in which the human body deviates from the predetermined distance, the controller 210 may initialize time. In addition, in a case in which the human body reenters the predetermined range, the controller 210 may recalculate time from the beginning.

The step of calculating the distance value from the human body (S330) may calculate a value of the distance from the human body in a case in which the human body is within the predetermined range for the predetermined time or more. That is, in a case in which the human body is within the predetermined range for the predetermined time or more, the controller 210 may calculate the value of the distance from the human body (S330).

The step of deciding the information output mode of the output unit based on presence or absence of the human body and the distance value from the human body (S340) may decide an information output mode based on the distance value from the human body in a case in which the human body is within the predetermined range for the predetermined time or more. That is, in a case in which the human body is within the predetermined range for the predetermined time or more, the controller 210 may decide the information output mode based on presence or absence of the human body and the distance value from the human body (S340). For example, the information output mode may be the size of text or voice outputting information or type of information. However, the present invention is not limited thereto.

The step of deciding the information output mode of the output unit (S340) may decide quantity of information output by the output unit 230 based on a distance range, within which the distance value from the human body is, among the predetermined distance ranges. That is, the controller 210 may decide quantity of information output by the output unit 230 based on a distance range, within which the distance value from the human body is, among the predetermined distance ranges.

The step of deciding the information output mode of the output unit (S340) may decide the size of text output by the output unit 230, the type, quality, and volume of a notification sound output by the output unit 230, or the type of information output by the output unit 230 based on the distance range, within which the distance value from the human body is. That is, the controller 210 may decide the size of text output by the output unit 230, the type, quality, and volume of a notification sound output by the output unit 230, or the type of information output by the output unit 230 based on the distance range, within which the distance value from the human body is.

For example, at the step of deciding the information output mode of the output unit 230 (S340), the controller 210 may add the number of information items output by the output unit 230 in a case in which the human body is within the predetermined range for the predetermined time or more. At the step of deciding the information output mode of the output unit 230 (S340), the controller 210 may increase quantity of information output by the output unit 230 as the distance value from the human body decreases.

The step of deciding the information output mode of the output unit (S340) may further include a step of recognizing use information of the human body (not shown). For example, the step of deciding the information output mode of the output unit (S340) may recognize presence or absence of use information of the sensed human body and output a plurality of use modes through the output unit in order of high use frequency based on the use information.

The control method of the electric home appliance according to the embodiment of the present invention may further include a step of determining whether the sensed human body gazes at the electric home appliance (not shown). At the step of deciding the information output mode of the output unit 230 (S340), the controller 210 may decrease luminance or volume of the output unit in a case in which the human body does not gaze at the electric home appliance.

For example, in a case in which the output unit 230 is a display unit 232 for visually outputting information, the controller 210 may decrease luminance of the output unit in a case in which the human body does not gaze at the electric home appliance. On the other hand, in a case in which the output unit 230 is a speaker 234 for aurally outputting information, the controller 210 may decrease volume of the output unit in a case in which the human body does not gaze at the electric home appliance.

As is apparent from the above description, an electric home appliance and a control method thereof according to an embodiment of the present invention may have the following and other effects.

In the electric home appliance and the control method thereof according to the embodiment of the present invention, it is possible to adjust information output by the output unit based on location of a user such that the user can easily recognize a state of the electric home appliance.

In the electric home appliance and the control method thereof according to the embodiment of the present invention, it is possible to display necessary for the user through the output unit based on a time during which the user is with a predetermined range such that more detailed information can be provided when the user is within a short distance, thereby providing information suitable for eyesight of the human body.

In the electric home appliance and the control method thereof according to the embodiment of the present invention, it is possible to recognize, in a case in which a user having previous use information approaches the electric home appliance, a use mode having high use frequency based on the use information, thereby achieving convenient use of the electric home appliance.

In the electric home appliance and the control method thereof according to the embodiment of the present invention, it is possible to decrease luminance of the display unit in a case in which the user does not gaze at the electric home appliance, thereby reducing power consumption.

In the electric home appliance and the control method thereof according to the embodiment of the present invention, it is possible to change an output mode in a case in which there is no user response although information is provided to the user, thereby properly providing information to the user.

Although all elements constituting the embodiments of the present invention are described to be integrated into a single one or to be operated as a single one, the present invention is not necessarily limited to such embodiments. According to embodiments, all of the elements may be selectively integrated into one or more and be operated as one or more within the object and the scope of the present invention.

Each of the elements may be implemented as independent hardware. Alternatively, some or all of the elements may be selectively combined into a computer program having a program module performing some or all functions combined in one or more pieces of hardware.

A plurality of codes and code segments constituting the computer program may be easily reasoned by those skilled in the art to which the present invention pertains. The computer program may be stored in a computer readable media such that the computer program is read and executed by a computer to implement embodiments of the present invention. Computer program storage media may include magnetic recording media, optical recording media, and carrier wave media.

The term "comprises", "includes", or "has" described herein should be interpreted not to exclude other elements but to further include such other elements since the corresponding elements may be inherent unless mentioned otherwise.

All terms including technical or scientific terms have the same meanings as generally understood by a person having ordinary skill in the art to which the present invention pertains unless mentioned otherwise.

Generally used terms, such as terms defined in a dictionary, should be interpreted to coincide with meanings of the related art from the context. Unless obviously defined in the present invention, such terms are not interpreted as ideal or excessively formal meanings.

Although the preferred embodiments of the present invention have been disclosed for illustrative purposes, those skilled in the art will appreciate that various modifications, additions and substitutions are possible without departing from the scope and spirit of the invention as disclosed in the accompanying claims.

The embodiments disclosed in the present invention are provided not to limit the technical concept of the present invention but to illustrate the technical concept of the present invention. Therefore, the scope of the technical concept of the present invention is not limited by such embodiments. The scope of the protection of the present invention should be determined by reasonable interpretation of the appended claims and all technical concepts coming within the equivalency range of the present invention should be interpreted to be embraced in the scope of the right of the present invention.

## Claims

1. An electric home appliance (100) comprising:
a sensing unit (140, 240) for sensing whether a human body is within a predetermined range and recognizing a distance value from the human body;
an output unit (130, 230) for outputting information; and
a controller (210) for deciding an information output mode of the output unit (130, 230) based on a distance range, within which the distance value from the human body is, among a plurality of predetermined distance ranges in a case in which the human body is sensed.

2. The electric home appliance (100) according to claim 1, wherein the controller (210) is adapted to decide size of text, type, quality, and volume of a notification sound, or type of information output by the output unit (130, 230) based on the distance range, within which the distance value from the human body is.

3. The electric home appliance (100) according to claim 1 or 2, wherein
the distance ranges comprise a first distance range, a second distance range greater than the first distance range, and a third distance range greater than the second distance range, and
the controller (210) is adapted to control the output unit (130, 230) to output at least one selected from among a current time, a current use mode, and a remaining operation time of the current use mode in a case in which the distance value from the human body is within the third distance range.

4. The electric home appliance (100) according any one of claims 1 to 3, wherein the controller (210) is adapted to control the output unit (130, 230) to display various temperature values necessary for control or a procedure of the current use mode in a case in which the distance value from the human body is within the second distance range.

5. The electric home appliance (100) according to any one of claims 1 to 4, wherein the controller (210) is adapted to control the output unit (130, 230) to display information for function setting in a case in which the distance value from the human body is within the first distance range.

6. The electric home appliance (100) according to any one of claims 1 to 5, wherein the controller (210) is adapted to increase quantity of information output by the output unit (130, 230) as the distance value from the human body decreases.

7. The electric home appliance (100) according to any one of claims 1 to 6, wherein
the output unit (130, 230) comprises a speaker (234) for outputting a notification sound indicating an operation state of the electric home appliance, and
the controller (210) is adapted to adjust volume of the speaker (234) based on the distance value from the human body.

8. A control method of an electric home appliance (100) comprising:
sensing (S310) whether a human body is within a predetermined range through a sensing unit;
calculating (S330) a distance value from the human body; and
deciding (S340) an information output mode of an output unit (130, 230) based on presence or absence of the human body and the distance value from the human body.

9. The control method according to claim 8, wherein the step of deciding (S340) the information output mode of the output unit (130, 230) comprises increasing quantity of information output by the output unit (130, 230) as the distance value from the human body decreases.

10. The control method according to claim 8 or 9, wherein the step of deciding (S340) the information output mode of the output unit (130, 230) comprises deciding quantity of information output by the output unit (130, 230) based on a distance range, within which the distance value from the human body is, among a plurality of predetermined distance ranges.

11. The control method according to any one of claims 8 to 10, wherein the step of deciding (S340) the information output mode of the output unit (130, 230) comprises deciding size of text, type, quality, and volume of a notification sound, or type of information output by the output unit (130, 230) based on the distance range, within which the distance value from the human body is.
